# EUROPÄISCHE PATENTANMELDUNG

(11) **EP 4 394 534 A1**
(43) Veröffentlichungstag der Anmeldung: **03.07.2024**
(21) Anmeldenummer: 22217197.7
(22) Anmeldetag: 29.12.2022
(51) Int. Cl.: G05B 23/02

(54) **VERFAHREN ZUR ÜBERWACHUNG VON MESS- UND/ODER ZUSTANDSGRÖSSEN IN EINEM PROZESSAUTOMATISIERUNGSSYSTEM UND PROZESSLEITSYSTEM**

(71) Anmelder: Siemens Aktiengesellschaft, 80333 München (DE)
(72) Erfinder: Lutz, Benjamin, 76327 Pfinztal (DE)
(74) Vertreter: Siemens Patent Attorneys

(57) **Zusammenfassung**

Zur Überwachung von Mess- und/oder Zustandsgrößen in einem Prozessautomatisierungssystem werden Komponenten des Prozessautomatisierungssystems durch computerbasierte Objekte repräsentiert und den Objekten zugeordnete Mess- und/oder Zustandsgrößen ereignisabhängig bzw. innerhalb vorgebbarer Zeitintervalle durch eine Steuerungseinrichtung (200) erfasst. Für ausgewählte Mess- bzw. Zustandsgrößen werden über eine graphische Benutzerschnittstelle Grenzwerte (152, 153) zur Überwachung spezifiziert. Innerhalb eines benutzerindividuellen Kontrollbereichs (150) an der graphischen Benutzerschnittstelle wird ein Zeitverlauf (151) hinsichtlich der spezifizierten Grenzwerte zu überwachender Mess- und/oder Zustandsgrößen dargestellt. Eine Visualisierungsdienstkomponente (210) steuert bei einem nicht dargestellten oder verdeckten Kontrollbereich eine Signalisierung von Grenzwertüber- bzw. -unterschreitungen innerhalb eines Anwenderselektionsbereichs (110) an der graphischen Benutzerschnittstelle.

## Beschreibung

Die vorliegende Erfindung betrifft ein Verfahren zur Überwachung von Mess- bzw. Zustandsgrößen in einem Prozessautomatisierungssystem und ein Prozessleitsystem, das zur Durchführung des Verfahrens geeignet ist.

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen im wesentlichen selbständigen Betrieb von Steuerungseinrichtungen, Sensoren, Maschinen und technischen Anlagen. Eine wesentliche Grundlage für eine zuverlässige Bereitstellung von Überwachungs-, Steuerungs- und Regelungsfunktionen mittels eines Prozessleitsystems besteht in einer vollständigen und korrekten Erfassung und Abbildung von Komponenten eines industriellen Prozessautomatisierungssystems. Dies schließt insbesondere eine Aufbereitung aktueller Mess- und Zustandsdaten der Komponenten des industriellen Prozessautomatisierungssystems sowie eine rechtzeitige und zielgerichtete Signalisierung von Alarmzuständen ein.

Mittels eines Engineering-Systems können insbesondere Steuerungsprogramme für Automatisierungsgeräte projektiert werden, die zur Steuerung bzw. Regelung einer technischen Anlage oder einer komplexen Maschine vorgesehen sind. Zur Laufzeit der Steuerungsprogramme bzw. während eines Runtime-Betriebs wird ein technischer Prozess durch die Automatisierungsgeräte, wie speicherprogrammierbare Steuerungen, gesteuert bzw. geregelt. Im Rahmen einer Prozessüberwachung während des Runtime-Betriebs kann eine Bedienperson mittels eines Prozessleitsystems Prozessabbilder aufrufen, um durch eine Visualisierung des Prozessabbilds einen Überblick über einen aktuellen Anlagenzustand zu erhalten sowie eine Prozessführung bzw. -bedienung wahrzunehmen.

*Unabhängig vom grammatikalischen Geschlecht eines bestimmten Begriffes sind Personen mit männlicher, weiblicher oder anderer Geschlechteridentität mit umfasst.*

In EP 3 690 580 B1 ist ein Prozessleitsystem beschrieben, das automatisch einen Prozessalarm auslöst, wenn Prozessdaten eine Auslösebedingung erfüllen. In diesem Fall übermittelt das Prozessleitsystem eine Alarmmeldung an ein Alarmsystem, das den Prozessalarm an eine Bedienperson ausgibt. Das Prozessleitsystem archiviert zu Erfassungszeitpunkten die Prozessdaten und die ausgelösten Prozessalarme. Das Alarmsystem fordert aufgrund der Selektion eines Prozessdatums und der Vorgabe eines Darstellungszeitraums durch die Bedienperson vom Prozessleitsystem für den Darstellungszeitraum eine Historie des selektierten Prozessdatums und eine Historie der einem jeweiligen Prozessobjekt zugeordneten Prozessalarme an. Das Alarmsystem gibt einen zeitlichen Verlauf des Prozessdatums als Grafik an die Bedienperson aus. Die Grafik umfasst eine Anzahl von Prozessdatenpunkten, die das Alarmsystem anhand der Werte des selektierten Prozessdatums eines jeweiligen Erfassungszeitraums ermittelt. Das Alarmsystem stellt die Prozessdatenpunkte in der Grafik in einer Codierung dar, die für den jeweiligen Prozessdatenpunkt jeweils die höchste Priorität angibt, mit der während des jeweiligen Erfassungszeitraums Prozessalarme aufgetreten sind.

Aus EP 3 805 882 B1 ist ein Leitsystem einer technischen Anlage bekannt, das zumindest einen Operator Station Server und einen Operator Station Client umfasst. Der Operator Station Server weist einen Visualisierungsdienst zur Ausgabe von graphischen Informationen an den Operator Station Client auf. Außerdem erzeugt der Operator Station Server aus einem ersten Messwert, der einem ersten technischen Objekt zugeordnet ist, und einem zweiten Messwert, zu einem zweiten technischen Objekt zugeordnet ist, ein XY-Trenddiagramm mit einem dort visualisierten Arbeitspunkt. Mittels des Visualisierungsdienstes wird das XY-Trenddiagramm an den Operator Station Client übertragen. Darüber hinaus weisen das XY-Trenddiagramm bzw. der Arbeitspunkt eine Referenz auf zumindest ein Objektmodell auf. Dabei ist der Arbeitspunkt durch ein dem referenzierten Objektmodell zugrundeliegendes technisches Objekt beeinflussbar. Bei einer Anwahl des Arbeitspunkts im XY-Trenddiagramm wird einem Operator des Operator Station Clients mittels des Visualisierungsdienstes das referenzierte Objektmodell angezeigt.

EP 3 968 107 B1 betrifft ein Prozessüberwachungssystem mit zumindest einer Bedieneinheit, die mit einem Server in Verbindung steht. Der Server weist zur Überwachung einer Automatisierungsanlage einen Visualisierungsservice auf, der die Bedieneinheit mit Prozesswerten und Alarmmeldungen versorgt. Die Bedieneinheit zeigt in einem Ein-Ausgabefenster ein Prozessobjekt mit seinem Prozesswerten an. Außerdem zeigt die Bedieneinheit eine Meldefolgeanzeige mit Alarmmeldungen aus einer Alarmliste an. Das Ein-Ausgabefenster weist ein Eingabefeld für Kurznachrichten und ein Aktivierungsmittel auf. Zur Verwaltung der Prozessobjekte ist eine Verwaltungskomponente vorgesehen, die bei einer eingegebenen Kurznachricht und einem aktivierten Aktivierungsmittel für das dem Eingabefeld zugeordnete Prozessobjekt eine Alarm-Instanz anlegt und die Kurznachricht als weitere Alarmmeldung in der Alarmliste hinterlegt. Die Meldefolgeanzeige ist dahingehend erweitert, weiteren Alarmmeldungen aus der Alarmliste als Kurznachrichten anzuzeigen.

Zur Bedienung und Beobachtung verfahrenstechnischer Anlagen werden dynamisierte Anlagenbilder sowie graphische Ansichten von Trendverläufen, Alarmsequenzen oder Zuständen von Prozessobjekten für Bedienpersonen eines Prozessleitsystems bereitgestellt. Während eines Regelbetriebs sind durch Bedienpersonen zahlreiche routinemäßige Prüfungen über Anlagenbilder und darin enthaltener graphischer Informationen durchzuführen. Dies geschieht entweder vorbeugend oder bei auftretenden Alarmen. Für routinemäßige Prüfungen müssen Anlagenbilder und graphische Ansichten für Bedienpersonen sichtbar sein. Grundsätzlich werden ausgewählte verfahrenstechnische Ereignisse je nach Projektierung durch Alarme gemeldet. Jedoch können Alarmfälle auf diese Weise nicht vorbeugend verhindert werden und führen somit zu potentiellen Gefährdungen.

Der vorliegenden Erfindung liegt die Aufgabe zugrunde, ein Verfahren zur effizienten und zuverlässigen Überwachung von insbesondere sicherheitsrelevanten Mess- bzw. Zustandsgrößen in einem Prozessautomatisierungssystem zu schaffen, das eine präventive Behandlung kritischer Betriebszustände ermöglicht, sowie eine geeignete Vorrichtung zur Implementierung des Verfahrens anzugeben.

Diese Aufgabe wird erfindungsgemäß durch ein Verfahren mit den in Patentanspruch 1 angegebenen Merkmalen und durch ein Prozessleitsystem mit den in Patentanspruch 12 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Überwachung von Mess- bzw. Zustandsgrößen in einem Prozessautomatisierungssystem werden Komponenten des Prozessautomatisierungssystems durch computerbasierte Objekte repräsentiert. Dabei werden die Objekte innerhalb einer hierarchischen Objektstruktur verwaltet, die Abhängigkeiten zwischen Objekten umfasst.

Computerbasierte Objekte können beispielsweise Betriebssysteme, Steuerungs- oder Anwendungsprogramme, durch Betriebssysteme, Steuerungs- oder Anwendungsprogramme bereitgestellte Dienste, Dienstkomponenten, Leistungsmerkmale, Funktionen oder Prozeduren, Zugriffsrechte auf Systemressourcen oder Peripheriegeräte sowie auf einem Speichermedium befindliche Daten sein. Funktionen oder Prozeduren umfassen dabei insbesondere auch eine Freigabe von Zugriffsberechtigungen in einem Automatisierungssystem. Auf einem Speichermedium befindliche Daten können beispielsweise zur Visualisierung von Prozessabbildern dienen und folgende Aspekte umfassen:
- Projektierung von Anzeigeelementen, die einerseits auf lokalen Daten und andererseits auf Daten zugeordneter Automatisierungsgeräte basieren,
- Alarmverwaltung, die Alarme zugeordneter Automatisierungsgeräte in bearbeitbarer bzw. quittierbarer Weise umfasst,
- Messdatenverwaltung, die beispielsweise auch eine Darstellung von Berichten oder sich abzeichnenden Trends aus zugeordneten Automatisierungsgeräten umfasst,
- Benutzerverwaltung, die eine Zugriffsrechtedefinition für zugeordnete Automatisierungsgeräte umfasst, insbesondere eine Zugriffsrechteeinschränkung auf ausgewählte Automatisierungsgeräte,
- Rezeptverwaltung, die eine Erstellung und Speicherung von Rezepten sowie deren selektive Bereitstellung an ausgewählten Bedien- und Beobachtungsstationen ermöglicht.

Ein computerbasiertes Objekt kann außerdem einem Rechenprozess zugeordnet sein, der sämtliche Einheiten eines in einen Arbeitsspeicher geladenen ausführbaren Programms umfasst. Unter einem Rechner sind beispielsweise PCs, Notebooks, Server, Tablets, Smartphones sowie Steuerungs- und Regelungsmodule, Sensoren oder Aktoren in der Automatisierungs-, Fahrzeug-, Kommunikations- oder Medizintechnik zu verstehen - allgemein Einrichtungen, in denen Computerprogramme ablaufen.

Erfindungsgemäß werden den Objekten zugeordnete Mess- bzw. Zustandsgrößen mittels Sensoren bzw. Beobachtersystemen ermittelt und ereignisabhängig bzw. innerhalb vorgebbarer Zeitintervalle durch zumindest eine Steuerungseinrichtung erfasst. Die Objekte werden zumindest an einer graphischen Benutzerschnittstelle einer mit der Steuerungseinrichtung verbundenen Bedien- und Beobachtungsstation dargestellt. Vorzugsweise werden die computerbasierten Objekte und die ihnen zugeordneten Mess- oder Zustandsgrößen durch die Steuerungseinrichtung zu einem Prozessabbild aggregiert, das durch die Steuerungseinrichtung laufend aktualisiert wird.

Für ausgewählte Mess- bzw. Zustandsgrößen werden erfindungsgemäß über die graphische Benutzerschnittstelle entsprechend einer Benutzereingabe Grenzwerte zur Überwachung spezifiziert. Innerhalb eines benutzerindividuellen Kontrollbereichs an der graphischen Benutzerschnittstelle wird ein Zeitverlauf hinsichtlich der spezifizierten Grenzwerte zu überwachender Mess- bzw. Zustandsgrößen dargestellt. Der Zeitverlauf der zu überwachenden Mess- bzw. Zustandsgrößen und an der graphischen Benutzerschnittstelle insbesondere innerhalb eines Anlagenplananzeigebereichs dargestellte Inhalte werden durch eine Visualisierungsdienstkomponente der Steuerungseinrichtung erfasst. Durch die Visualisierungsdienstkomponente werden vorzugsweise auch die innerhalb des Kontrollbereichs spezifizierten Grenzwerte erfasst. Insbesondere bei einem nicht dargestellten oder verdeckten Kontrollbereich steuert die Visualisierungsdienstkomponente eine Signalisierung von Grenzwertüber- bzw. -unterschreitungen innerhalb eines Anwenderselektionsbereichs an der graphischen Benutzerschnittstelle.

Vorliegende Erfindung ermöglicht eine dynamisch zur Laufzeit durch Bedienpersonen konfigurierbare Grenzwertüberwachung von Prozesswerten verfahrenstechnischer Anlagen. Somit können Bedienpersonen unabhängig von einem herkömmlichen Alarmmanagement für aktuelle oder zukünftige Zeiträume Grenzwertüberwachungen zur Laufzeit konfigurieren, die auch dann aktive sind, wenn entsprechende Anlagenbilder oder Trendanzeigen nicht geöffnet sind. Auf diese Weise können Bedienpersonen umfassend, schnell und gezielt über betriebsführungsmäßig relevante Änderungen von Prozesswerten informiert werden.

Entsprechend einer bevorzugten Ausgestaltung der vorliegenden Erfindung werden die computerbasierten Objekte in zumindest einer Datenbank eines Engineering-Systems persistent gespeichert und mittels des Engineering-Systems verwaltet. Außerdem werden mittels des Engineering-Systems für ausgewählte Mess- bzw. Zustandsgrößen spezifizierte Bedingungen zur Erzeugung von Alarmen vorgegeben. Dies ermöglicht eine zu Prozessobjekten konsistente Spezifikation von Alarmbedingungen und Alarmbehandlungsmaßnahmen.

Vorteilhafterweise werden benutzerindividuelle Einstellungen für Grenzwertüberwachungen der ausgewählten Mess- bzw. Zustandsgrößen durch die Visualisierungsdienstkomponente in einer Datenbank einer Benutzerverwaltungskomponente persistiert. Dabei werden die benutzerindividuellen Einstellungen für Grenzwertüberwachungen bei einer Benutzeranmeldung an der Bedien- und Beobachtungsstation durch die Visualisierungsdienstkomponente aus der Datenbank abgerufen. Daher können die benutzerindividuellen Einstellungen für Grenzwertüberwachungen bequem und effizient für längere oder fortlaufende Überwachungsaufgaben genutzt werden.

Die Benutzereingabe zur Spezifizierung der Grenzwerte erfolgt vorzugsweise durch Einzeichnen eines Grenzwertverlaufs innerhalb des Kontrollbereichs an der graphischen Benutzerschnittstelle bzw. durch Eingabe von Zahlenwerten. Damit können sowohl Grenzwertverläufe mit zeitabhängiger Änderung bzw. sich dynamisch ändernde Grenzwertverläufe als auch statische Grenzwertverläufe benutzerfreundlich erfasst werden. Insbesondere können die Grenzwerte jeweils einen oberen Grenzwert und einen unteren Grenzwert umfassen, die innerhalb des Kontrollbereichs spezifizierbar sind. Darüber hinaus können entsprechend der Benutzereingabe zusätzlich zu Grenzwerten Zeiträume zur Überwachung spezifiziert werden. In diesem Fall erfolgt die Signalisierung von Grenzwertüber- bzw. -unterschreitungen nur innerhalb der spezifizierten Zeiträume. Damit kann sich ein Operator auf eine Behandlung tatsächlich relevanter Änderungen von Prozesswerten konzentrieren.

Entsprechend einer besonders bevorzugten Ausgestaltung der vorliegenden Erfindung erfolgt bei benutzerseitiger Bestätigung einer innerhalb des Anwenderselektionsbereichs signalisierten Grenzwertüber- bzw. -unterschreitung jeweils eine gegenüber einem Anlagenplananzeigebereich überlagerte Darstellung des Kontrollbereichs. Dabei sind der Anwenderselektionsbereich und der Anlagenplananzeigebereich voneinander separierte Bereiche der graphischen Benutzerschnittstelle. Auf diese Weise ist eine Signalisierung von Grenzwertüber- bzw. -unterschreitungen auch dann möglich, wenn der Kontrollbereich durch andere im Anlagenplananzeigebereich dargestellte Informationen überdeckt ist oder ausgeblendet ist.

Vorteilhafterweise umfasst die graphische Benutzerschnittstelle zusätzlich zum Anwenderselektionsbereich und Anlagenplananzeigebereich einen Alarmanzeigebereich und ein Operator-Panel. Dabei wird im Anlagenplananzeigebereich ein Anlagenbild mit graphischen Repräsentationen von Prozessobjekten dargestellt, während Alarme innerhalb des Alarmanzeigebereichs dargestellt werden. Über das Operator-Panel werden Zoom- bzw. Bildnavigationsfunktionen in Bezug auf den Anlagenplananzeigebereich bereitgestellt. Dies ermöglicht eine effiziente und zuverlässige Überwachung unterschiedlicher Arten von Informationsquellen zur Wahrnehmung von Betriebsführungsaufgaben in Prozessleitsystemen.

Der Anwenderselektionsbereich umfasst vorzugsweise einen Planauswahlabschnitt und einen Anwenderselektionsabschnitt. Dabei umfasst der Planauswahlabschnitt eine hierarchische Auflistung sämtlicher Anlagenpläne und Anlagenplanausschnitte, die dem Prozessautomatisierungssystem zugeordnet sind. Innerhalb des Anwenderselektionsabschnitts werden benutzerspezifische Einstellungen für zu überwachende Mess- bzw. Zustandsgrößen, für Typschild-artige Benutzerschnittstellenelemente und für benutzerindividuell konfigurierbare Alarmgruppen verfügbar gemacht. Insbesondere werden die Grenzwertüber- bzw. -unterschreitungen jeweils innerhalb des Anwenderselektionsabschnitts unter Nennung der jeweiligen Mess- bzw. Zustandsgrößen signalisiert werden. Dies ermöglicht Bedienpersonen eine zuverlässige und schnelle Erfassung potentiell kritischer Änderungen von Prozesswerten.

Das erfindungsgemäße Prozessleitsystem ist zur Durchführung eines Verfahrens entsprechend vorangehenden Ausführungen vorgesehen und umfasst zumindest eine Bedien- und Beobachtungsstation, zumindest eine Steuerungseinrichtung sowie zumindest eine von der Steuerungseinrichtung umfasste Visualisierungsdienstkomponente. Das Prozessleitsystem ist dafür ausgestaltet und eingerichtet, dass Komponenten eines industriellen Prozessautomatisierungssystems durch computerbasierte Objekte repräsentiert werden. Dabei werden die Objekte innerhalb einer hierarchischen Objektstruktur verwaltet, die Abhängigkeiten zwischen Objekten umfasst.

Die Steuerungseinrichtung des erfindungsgemäßen Prozessleitsystems ist dafür ausgestaltet und eingerichtet, dass den Objekten zugeordnete, mittels Sensoren bzw. Beobachtersystemen ermittelte Mess- bzw. Zustandsgrößen ereignisabhängig bzw. innerhalb vorgebbarer Zeitintervalle erfasst werden. Die Bedien- und Beobachtungsstation ist mit der Steuerungseinrichtung verbunden und umfasst eine graphische Benutzerschnittstelle zur Darstellung der Objekte. Die Bedien- und Beobachtungsstation ist dafür ausgestaltet und eingerichtet, dass für ausgewählte Mess- bzw. Zustandsgrößen über die graphische Benutzerschnittstelle entsprechend einer Benutzereingabe Grenzwerte zur Überwachung spezifiziert werden. Außerdem ist die graphischen Benutzerschnittstelle dafür ausgestaltet und eingerichtet, einen Zeitverlauf hinsichtlich der spezifizierten Grenzwerte zu überwachender Mess- bzw. Zustandsgrößen innerhalb eines benutzerindividuellen Kontrollbereichs darzustellen.

Darüber hinaus ist die Visualisierungsdienstkomponente der Steuerungseinrichtung erfindungsgemäß dafür ausgestaltet und eingerichtet, den Zeitverlauf der zu überwachenden Mess- bzw. Zustandsgrößen und an der graphischen Benutzerschnittstelle dargestellte Inhalte zu erfassen. Ferner ist die Visualisierungsdienstkomponente dafür ausgestaltet und eingerichtet, bei einem nicht dargestellten oder verdeckten Kontrollbereich eine Signalisierung von Grenzwertüber- bzw. -unterschreitungen innerhalb eines Anwenderselektionsbereichs an der graphischen Benutzerschnittstelle zu steuern.

Vorzugsweise umfasst das Prozessleitsystem zusätzlich ein Engineering-System, das dafür ausgestaltet und eingerichtet ist, die computerbasierten Objekte in einer Datenbank des Engineering-Systems persistent zu speichern, die Objekte zu verwalten und die für ausgewählte Mess- bzw. Zustandsgrößen spezifizierten Bedingungen zur Erzeugung der Alarme vorzugeben. Auf diese Weise können Spezifikation von Alarmbedingungen und Alarmbehandlungsmaßnahmen effizient zu Prozessobjekten konsistent gehalten.

Die vorliegende Erfindung wird nachfolgend an einem Ausführungsbeispiel anhand der Zeichnung näher erläutert. Es zeigt
- Figur 1: eine graphische Benutzerschnittstelle einer Bedienund Beobachtungsstation zur Überwachung von Messbzw. Zustandsgrößen in einem Prozessautomatisierungssystem,
- Figur 2: einen an der graphischen Benutzerschnittstelle darstellbaren benutzerindividuellen Kontrollbereich zur Spezifizierung von Grenzwerten für zu überwachende Mess- bzw. Zustandsgrößen,
- Figur 3: den benutzerindividuellen Kontrollbereich gemäß Figur 2 während einer Spezifizierung von dynamischen Grenzwerten,
- Figur 4: die graphische Benutzerschnittstelle gemäß Figur 1 mit einer Liste zu überwachender Mess- bzw. Zustandsgrößen,
- Figur 5: eine an der graphischen Benutzerschnittstelle signalisierte Grenzwertüber- bzw. -unterschreitung,
- Figur 6: eine schematische Darstellung eines Prozessleitsystems zur Überwachung von Mess- bzw. Zustandsgröße in einem Prozessautomatisierungssystem.

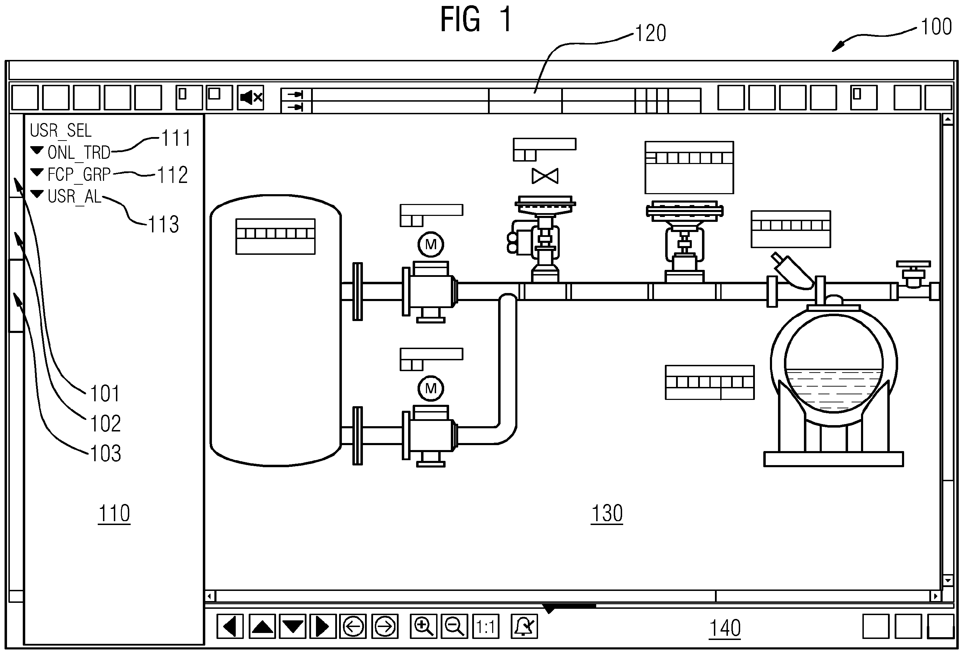

Entsprechend Figur 1 werden Komponenten eines industriellen Prozessautomatisierungssystems repräsentierende computerbasierte Objekte an einer graphischen Benutzerschnittstelle einer von einem Prozessleitsystem umfassten Bedien- und Beobachtungsstation 100 zwei- oder dreidimensional dargestellt.

Die graphische Benutzerschnittstelle umfasst einen Anwenderselektionsbereich 110, einen Alarmanzeigebereich 120, einen Anlagenplananzeigebereich 130 und ein Operator-Panel 140. Im Anlagenplananzeigebereich 130 kann beispielsweise ein Anlagenbild mit graphischen Repräsentationen von Rohrleitungen und Prozessobjekten, wie Tanks, Kessel, Pumpen, Ventile oder Durchflussmesser, dargestellt werden. Über das Operator-Panel 140 werden insbesondere Zoom- und Bildnavigationsfunktionen in Bezug auf den Anlagenplananzeigebereich 130 bereitgestellt.

Der Anwenderselektionsbereich 110 umfasst einen Planauswahlabschnitt 101, einen Equipment-Auswahlabschnitt 102 und einen Anwenderselektionsabschnitt 103, zu denen im vorliegenden Ausführungsbeispiel jeweils mittels eines entsprechenden Tabs navigiert werden kann. Der Planauswahlabschnitt 101 umfasst eine hierarchische Auflistung sämtlicher Anlagenpläne und Anlagenplanausschnitte, die dem Prozessautomatisierungssystem zugeordnet sind. Mittels des Anwenderselektionsabschnitts 103 werden benutzerspezifische Einstellungen für Online-Trends 111 zu überwachten Mess- bzw. Zustandsgrößen, für Faceplate-Gruppen 112 mit Typschild-artigen Benutzerschnittstellenelementen und für individuell konfigurierbare Alarmgruppen 113 verfügbar gemacht.

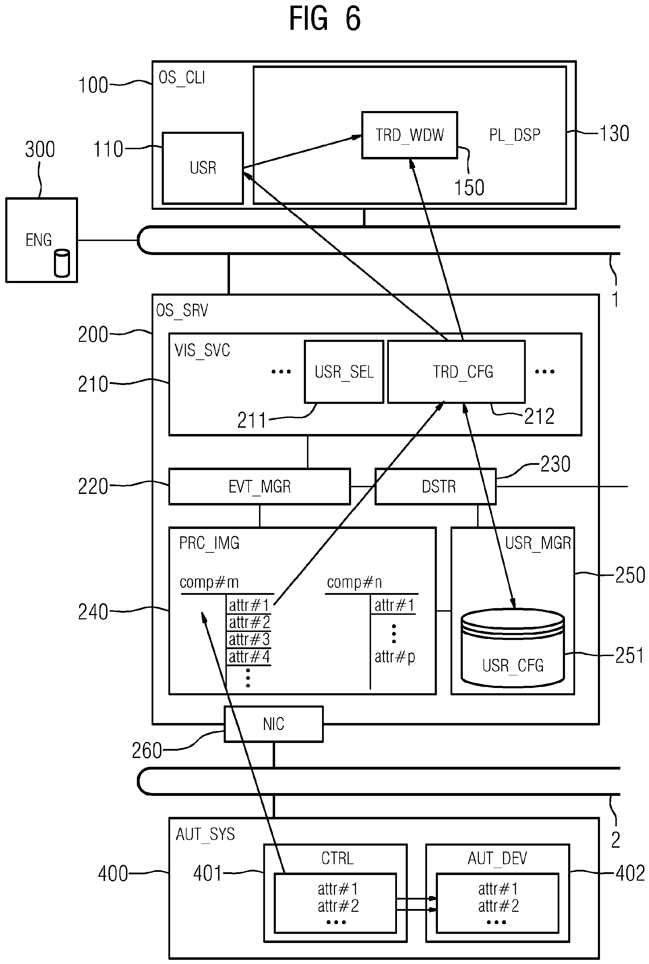

Die Objekte werden mittels eines in Figur 6 dargestellten Engineering-Systems 300 verwaltet, das dem Prozessleitsystem zugeordnet ist, und insbesondere in einer Datenbank des Engineering-Systems 300 persistent gespeichert. Dabei werden die Objekte innerhalb einer hierarchischen Objektstruktur verwaltet, die Abhängigkeiten zwischen den Objekten umfasst. Außerdem können mittels des Engineering-Systems 300 für ausgewählte Mess- bzw. Zustandsgrößen spezifizierte Bedingungen zur Erzeugung von Alarmen vorgegeben werden, die innerhalb des Alarmanzeigebereichs 120 dargestellt werden.

Den Objekten zugeordnete Mess- bzw. Zustandsgrößen werden mittels Sensoren bzw. Beobachtersystemen ermittelt und ereignisabhängig bzw. innerhalb vorgebbarer Zeitintervalle durch eine mit der Bedien- und Beobachtungsstation 100 verbundene Steuerungseinrichtung 200 erfasst. Dabei sind die Bedien- und Beobachtungsstation 100, die Steuerungseinrichtung 200 und das Engineering-System 300 über ein Ethernet- bzw. IP-basiertes Kommunikationsnetz 1 miteinander verbunden, während die Steuerungseinrichtung 200 im vorliegenden Ausführungsbeispiel über ein Feldbus-System 2 mit Sensoren und Aktoren des Prozessautomatisierungssystems verbunden ist. Dabei umfasst die Steuerungseinrichtung 200 eine spezielle Netzwerkkarte 260 für das Feldbus-System 2. Die Sensoren und Aktoren sind insbesondere einem Automatisierungssystem 400 zugeordnet, das im vorliegenden Ausführungsbeispiel zumindest eine speicherprogrammierbare Steuerung 401 und ein diese gesteuertes bzw. geregeltes Automatisierungsgerät 402 umfasst.

Die Steuerungseinrichtung 200 umfasst entsprechend Figur 6 eine Visualisierungsdienstkomponente 210, durch die eine Darstellung der Objekte innerhalb des Anlagenplananzeigebereichs 130 der graphischen Benutzerschnittstelle der Bedien- und Beobachtungsstation 100 gesteuert wird. Die Objekte und die ihnen zugeordneten Mess- oder Zustandsgrößen werden durch die Steuerungseinrichtung 200 zu einem Prozessabbild aggregiert, das durch die Steuerungseinrichtung 200 laufend aktualisiert wird. Hierfür umfasst die Steuerungseinrichtung 200 eine Prozessabbildkomponente 240, die über eine Event-Management-Komponente 220 der Steuerungseinrichtung 220 Änderungen des Prozessabbilds an die Visualisierungsdienstkomponente 210 meldet.

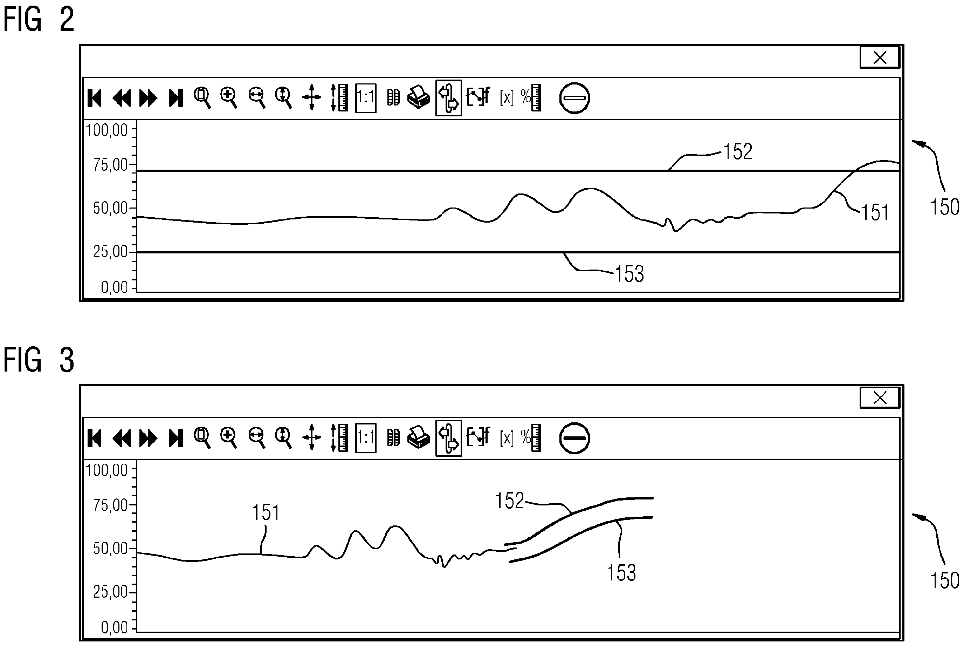

Für ausgewählte Mess- bzw. Zustandsgrößen können über die graphische Benutzerschnittstelle entsprechend einer Benutzereingabe Grenzwerte zur Überwachung spezifiziert werden. Im vorliegenden Ausführungsbeispiel kann über die benutzerspezifischen Einstellungen für Online-Trends 111 innerhalb des Anwenderselektionsabschnitts 103 ein in Figur 2 und 3 dargestellter benutzerindividueller Kontrollbereich 150 an der graphischen Benutzerschnittstelle geöffnet werden. Innerhalb dieses Kontrollbereichs 150 können die Grenzwerte spezifiziert werden. Vorzugsweise umfassen die Grenzwerte jeweils einen oberen Grenzwert 152 und einen unteren Grenzwert 153.

Insbesondere durch Eingabe von Zahlenwerten können statische Grenzwerte 152, 153 entsprechend Figur 2 vorgegeben werden. Alternativ oder zusätzlich können auch dynamische Grenzwerte 152, 153 entsprechend Figur 3 vorgegeben werden, beispielsweise durch Einzeichnen eines Grenzwertverlaufs mit zeitabhängiger Änderung innerhalb des Kontrollbereichs 150. Darüber hinaus können entsprechend der Benutzereingabe zusätzlich zu Grenzwerten 152, 153 auch Zeiträume zur Überwachung der ausgewählten Mess- bzw. Zustandsgrößen spezifiziert werden. Bei dem in Figur 3 dargestellten Beispiel ist der Grenzwertverlauf ersichtlich nur für einzelnes Zeitintervall in den Kontrollbereich 150 eingezeichnet. Eine Signalisierung von Grenzwertüber- bzw. -unterschreitungen wird in derartigen Fällen vorzugsweise nur innerhalb der spezifizierten Zeiträume erfolgen. Neben den Grenzwerten 152, 153 wird innerhalb des Kontrollbereichs 150 ein Zeitverlauf 151 hinsichtlich der spezifizierten Grenzwerte 152, 153 zu überwachender Mess- bzw. Zustandsgrößen an der graphischen Benutzerschnittstelle der Bedien- und Beobachtungsstation 100 dargestellt.

Durch eine Online-Trend-Konfigurationseinheit 212 der Visualisierungsdienstkomponente 210 werden zusätzlich zu den innerhalb des Kontrollbereichs 150 spezifizierten Grenzwerten 152, 153 der Zeitverlauf 151 der zu überwachenden Mess- bzw. Zustandsgrößen und an der graphischen Benutzerschnittstelle innerhalb des Anlagenplananzeigebereichs 130 dargestellte Inhalte erfasst. Speziell bei einem nicht dargestellten oder verdeckten Kontrollbereich 150 steuert die Visualisierungsdienstkomponente 210 bzw. die Online-Trend-Konfigurationseinheit 212 eine Signalisierung von Grenzwertüber- bzw. -unterschreitungen innerhalb des Anwenderselektionsbereichs 110 an der graphischen Benutzerschnittstelle.

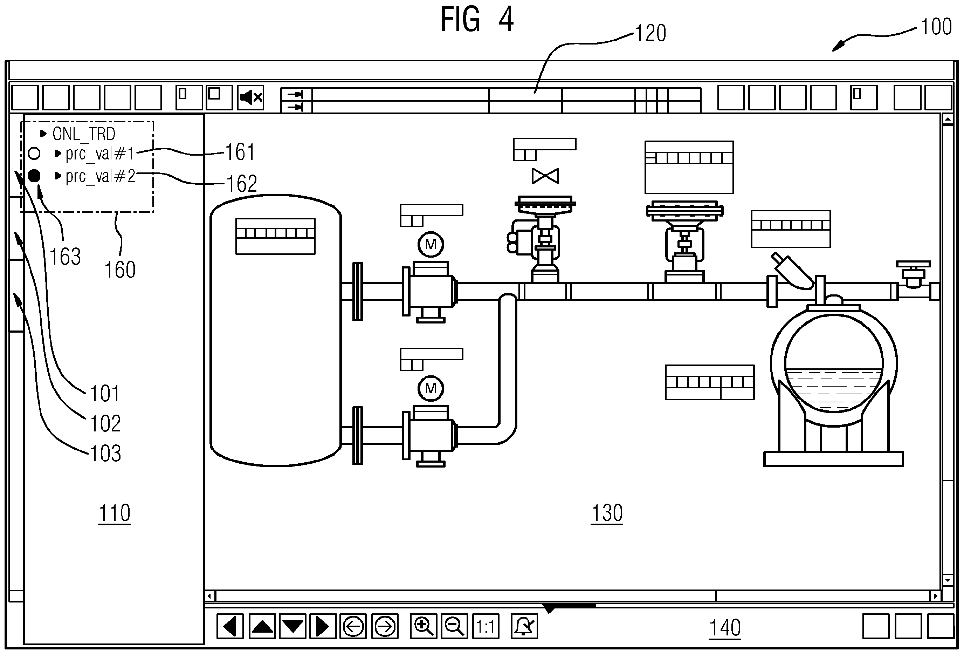

Wie in Figur 4 ersichtlich, wird bei entsprechend obigen Ausführungen spezifizierten Grenzwerten eine Liste 160 zu überwachender Mess- bzw. Zustandsgrößen innerhalb des Anwenderselektionsbereichs 110 dargestellt. Im vorliegenden Ausführungsbeispiel umfasst diese Liste 160 eine erste zu überwachende Mess- bzw. Zustandsgröße 161 sowie eine zweite zu überwachende Mess- bzw. Zustandsgröße 162, die beispielsweise der speicherprogrammierbaren Steuerung 401 bzw. dem Automatisierungsgerät 402 zugeordnet sein können. Innerhalb der Liste 160 werden auch jeweils Grenzwertüber- bzw. -unterschreitungen unter Nennung der jeweiligen Mess- bzw. Zustandsgrößen signalisiert. Beispielsweise erfolgt dies mittels eines vor der Nennung der jeweiligen Mess- bzw. Zustandsgröße 161, 162 in der Liste 160 dargestellten graphischen Symbols 163 für eine Grenzwertüber- bzw. -unterschreitung. Im vorliegenden Ausführungsbeispiel liegt eine Grenzwertüber- bzw. -unterschreitung für die zweite zu überwachende Mess- bzw. Zustandsgröße 162 vor, die durch das Symbol 163 signalisiert wird.

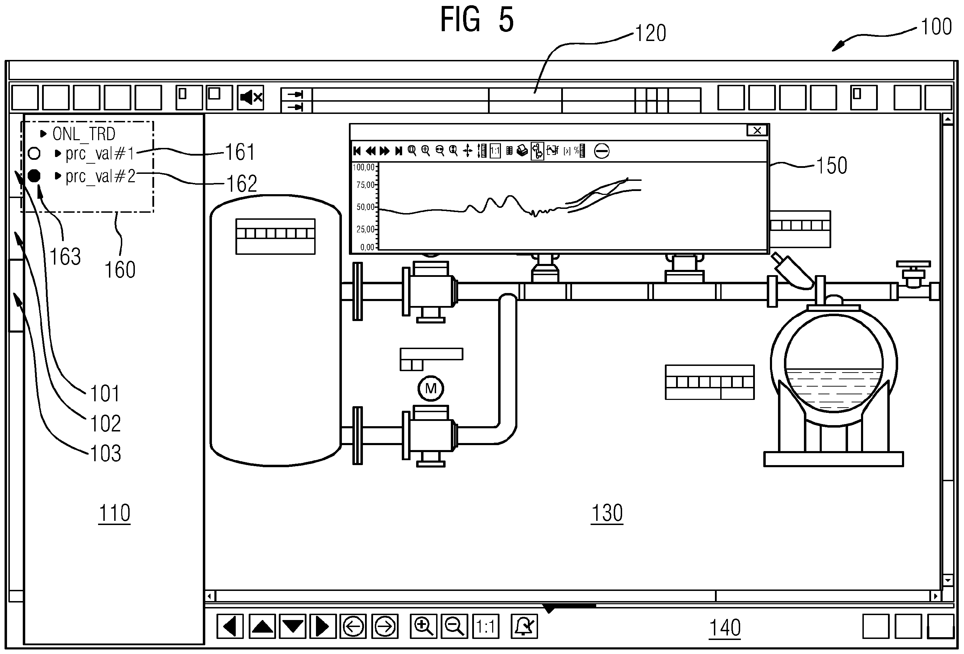

Entsprechend Figur 5 erfolgt bei benutzerseitiger Bestätigung einer innerhalb des Anwenderselektionsbereichs 110 bzw. innerhalb der Liste 160 signalisierten Grenzwertüber- bzw. -unterschreitung jeweils eine gegenüber dem Anlagenplananzeigebereich 130 überlagerte Darstellung des Kontrollbereichs 150. Dadurch dass der Anwenderselektionsbereich 110 und der Anlagenplananzeigebereich 130 voneinander separierte Bereiche der graphischen Benutzerschnittstelle sind, kann somit eine für Bedienpersonen deutliche Signalisierung einer Grenzwertüber- bzw. -unterschreitung über die vom Anwenderselektionsbereich 110 umfasste Liste 160 der zu überwachenden Mess- bzw. Zustandsgrößen auch bei einem ausgeblendeten oder durch den Anlagenplananzeigebereich 130 verdeckten Kontrollbereich 150 sichergestellt werden. Auch die überlagerte Darstellung des Kontrollbereichs 150 an der graphischen Benutzerschnittstelle der Bedien- und Beobachtungsstation 100 wird durch die Visualisierungsdienstkomponente 210 bzw. die Online-Trend-Konfigurationseinheit 212 gesteuert.

Entsprechend Figur 6 umfasst die Visualisierungsdienstkomponente 210 neben der Online-Trend-Konfigurationseinheit 212 eine Anwenderselektionseinheit 211, die innerhalb des Anwenderselektionsbereichs 110 an der graphischen Benutzerschnittstelle der Bedien- und Beobachtungsstation 100 vorgenommene benutzerspezifische Einstellungen erfasst und in einer Datenbank 251 einer Benutzerverwaltungskomponente 250 der Steuerungseinrichtung 200 persistiert. Auch benutzerindividuelle Einstellungen für Grenzwertüberwachungen der ausgewählten Mess- bzw. Zustandsgrößen werden durch die Visualisierungsdienstkomponente 210 bzw. die Online-Trend-Konfigurationseinheit 212 in der Datenbank 251 der Benutzerverwaltungskomponente 250 dementsprechend persistiert.

Die Benutzerverwaltungskomponente 250 ist über eine Verteilerkomponente 230 mit der Event-Management-Komponente 220 der Steuerungseinrichtung 200 gekoppelt. Auf diese Weise können die benutzerspezifischen Einstellungen bei Anmeldung eines Benutzers an der Bedien- und Beobachtungsstation 100 über die Event-Management-Komponente 220 aus der Datenbank 251 abgerufen und durch die Visualisierungsdienstkomponente 210 zur Steuerung der Darstellung der Objekte an der graphischen Benutzerschnittstelle der Bedien- und Beobachtungsstation 100 verwendet werden. Dies gilt insbesondere auch für die benutzerindividuellen Einstellungen für Grenzwertüberwachungen der ausgewählten Mess- bzw. Zustandsgrößen.

Darüber hinaus umfasst die Visualisierungsdienstkomponente 210 neben der Anwenderselektionseinheit 211 und der Online-Trend-Konfigurationseinheit 212 eine Steuerungseinheit (Distributed Control System Domain Logic) zur Anpassung an der graphischen Benutzerschnittstelle der Bedien- und Beobachtungsstation 100 dazustellender verfahrenstechnischer Symbole, insbesondere Blocksymbole und Faceplates, in Anlagenplänen und Anlagenplanausschnitten an einen jeweiligen Betriebszustand bzw. an aktuelle Mess- und Zustandszugrößen. Dabei greift diese Steuerungseinheit auf einen aktuellen Visualisierungszustand der graphischen Benutzerschnittstelle der Bedien- und Beobachtungsstation 100. Der Visualisierungszustand umfasst insbesondere Informationen über geöffnete Anlagenpläne, geöffnete Fenster und Inhalte sowie getätigte Benutzereingaben und wird durch eine Bildschirmobjekt-Management-Einheit (Screen Object Model) erfasst. Damit dynamisiert die Steuerungseinheit nur eine Visualisierung tatsächlich an der graphischen Benutzerschnittstelle der Bedien- und Beobachtungsstation 100 dargestellter verfahrenstechnischer Symbole. Darüber hinaus wird der jeweilige Visualisierungszustand durch die Visualisierungsdienstkomponente 210 in der Datenbank 251 der Benutzerverwaltungskomponente 250 persistiert. Somit kann ein zuletzt aktiver Visualisierungszustand einer Bedienperson nach einem erneuten Einloggen wiederhergestellt werden.

## Patentansprüche

1. Verfahren zur Überwachung von Mess- und/oder Zustandsgrößen in einem Prozessautomatisierungssystem, bei dem
- Komponenten des Prozessautomatisierungssystems durch computerbasierte Objekte repräsentiert werden, wobei die Objekte innerhalb einer hierarchischen Objektstruktur verwaltet werden, die Abhängigkeiten zwischen Objekten umfasst,
- den Objekten zugeordnete Mess- und/oder Zustandsgrößen mittels Sensoren und/oder Beobachtersystemen ermittelt und ereignisabhängig und/oder innerhalb vorgebbarer Zeitintervalle durch eine Steuerungseinrichtung (200) erfasst werden,
- die Objekte an einer graphischen Benutzerschnittstelle einer mit der Steuerungseinrichtung (200) verbundenen Bedien- und Beobachtungsstation (100) dargestellt werden,
- für ausgewählte Mess- und/oder Zustandsgrößen über die graphische Benutzerschnittstelle entsprechend einer Benutzereingabe Grenzwerte (152, 153) zur Überwachung spezifiziert werden,
- ein Zeitverlauf (151) hinsichtlich der spezifizierten Grenzwerte zu überwachender Mess- und/oder Zustandsgrößen innerhalb eines benutzerindividuellen Kontrollbereichs (150) an der graphischen Benutzerschnittstelle dargestellt wird,
- der Zeitverlauf der zu überwachenden Mess- und/oder Zustandsgrößen und an der graphischen Benutzerschnittstelle dargestellte Inhalte durch eine Visualisierungsdienstkomponente (210) der Steuerungseinrichtung erfasst werden,
- die Visualisierungsdienstkomponente bei einem nicht dargestellten oder verdeckten Kontrollbereich eine Signalisierung von Grenzwertüber- und/oder -unterschreitungen innerhalb eines Anwenderselektionsbereichs (110) an der graphischen Benutzerschnittstelle steuert.

2. Verfahren nach Anspruch 1,
bei dem die computerbasierten Objekte in zumindest einer Datenbank eines Engineering-Systems (300) persistent gespeichert werden, bei dem die Objekte mittels des Engineering-Systems verwaltet werden und bei dem mittels des Engineering-Systems für ausgewählte Mess- und/oder Zustandsgrößen spezifizierte Bedingungen zur Erzeugung von Alarmen vorgegeben werden.

3. Verfahren nach einem der Ansprüche 1 oder 2,
bei dem die computerbasierten Objekte und die ihnen zugeordneten Mess- oder Zustandsgrößen durch die Steuerungseinrichtung (200, 240) zu einem Prozessabbild aggregiert werden, das durch die Steuerungseinrichtung laufend aktualisiert wird.

4. Verfahren nach einem der Ansprüche 1 bis 3,
bei dem benutzerindividuelle Einstellungen für Grenzwertüberwachungen der ausgewählten Mess- und/oder Zustandsgrößen durch die Visualisierungsdienstkomponente in einer Datenbank (251) einer Benutzerverwaltungskomponente (250) persistiert und bei einer Benutzeranmeldung an der Bedien- und Beobachtungsstation (100) durch die Visualisierungsdienstkomponente (210) aus der Datenbank abgerufen werden.

5. Verfahren nach einen der Ansprüche 1 bis 4,
bei dem die Benutzereingabe zur Spezifizierung der Grenzwerte durch Einzeichnen eines Grenzwertverlaufs innerhalb des Kontrollbereichs an der graphischen Benutzerschnittstelle und/oder durch Eingabe von Zahlenwerten erfolgt.

6. Verfahren nach Anspruch 5,
bei dem die Grenzwerte jeweils einen oberen Grenzwert und einen unteren Grenzwert umfassen, die innerhalb des Kontrollbereichs spezifizierbar sind.

7. Verfahren nach einem der Ansprüche 5 oder 6,
bei dem der Grenzwertverlauf mit zeitabhängiger Änderung spezifizierbar ist.

8. Verfahren nach einem der Ansprüche 5 bis 7,
bei dem entsprechend der Benutzereingabe zusätzlich zu Grenzwerten Zeiträume zur Überwachung spezifiziert werden und bei dem die Signalisierung von Grenzwertüber- und/oder -unterschreitungen nur innerhalb der spezifizierten Zeiträume erfolgt.

9. Verfahren nach einem der Ansprüche 1 bis 8,
bei dem bei benutzerseitiger Bestätigung einer innerhalb des Anwenderselektionsbereichs (110) signalisierten Grenzwertüber- und/oder -unterschreitung jeweils eine gegenüber einem Anlagenplananzeigebereich (130) überlagerte Darstellung des Kontrollbereichs (150) erfolgt und bei dem der Anwenderselektionsbereich und der Anlagenplananzeigebereich voneinander separierte Bereiche der graphischen Benutzerschnittstelle sind.

10. Verfahren nach Anspruch 9,
bei dem die graphische Benutzerschnittstelle zusätzlich zum Anwenderselektionsbereich (110) und Anlagenplananzeigebereich (130) einen Alarmanzeigebereich (120) und ein Operator-Panel (140) umfasst, bei dem im Anlagenplananzeigebereich ein Anlagenbild mit graphischen Repräsentationen von Prozessobjekten dargestellt wird, bei dem Alarme innerhalb des Alarmanzeigebereichs dargestellt werden und bei dem über das Operator-Panel Zoom- und/oder Bildnavigationsfunktionen in Bezug auf den Anlagenplananzeigebereich bereitgestellt werden.

11. Verfahren nach einem der Ansprüche 1 bis 10,
bei dem der Anwenderselektionsbereich (110) einen Planauswahlabschnitt (101) und einen Anwenderselektionsabschnitt (103) umfasst, bei dem der Planauswahlabschnitt eine hierarchische Auflistung sämtlicher Anlagenpläne und Anlagenplanausschnitte umfasst, die dem Prozessautomatisierungssystem zugeordnet sind, bei dem innerhalb des Anwenderselektionsabschnitts (103) benutzerspezifische Einstellungen (111-113) für zu überwachende Mess- und/oder Zustandsgrößen, für Typschild-artige Benutzerschnittstellenelemente und für benutzerindividuell konfigurierbare Alarmgruppen verfügbar gemacht werden und bei dem die Grenzwertüber- und/oder -unterschreitungen jeweils innerhalb des Anwenderselektionsabschnitts (110) unter Nennung der jeweiligen Mess- und/oder Zustandsgrößen signalisiert werden.

12. Prozessleitsystem zur Durchführung eines Verfahrens nach einem der Ansprüche 1 bis 11 mit
- zumindest einer Bedien- und Beobachtungsstation (100),
- zumindest einer Steuerungseinrichtung (200),
- zumindest einer von der Steuerungseinrichtung umfassten Visualisierungsdienstkomponente (210),
- wobei das Prozessleitsystem dafür ausgestaltet und eingerichtet ist, dass Komponenten eines Prozessautomatisierungssystems durch computerbasierte Objekte repräsentiert werden, wobei die Objekte innerhalb einer hierarchischen Objektstruktur verwaltet werden, die Abhängigkeiten zwischen Objekten umfasst,
- wobei die Steuerungseinrichtung (200) dafür ausgestaltet und eingerichtet ist, dass den Objekten zugeordnete, mittels Sensoren und/oder Beobachtersystemen ermittelte Mess- und/oder Zustandsgrößen ereignisabhängig und/oder innerhalb vorgebbarer Zeitintervalle erfasst werden,
- wobei die Bedien- und Beobachtungsstation (100) mit der Steuerungseinrichtung (200) verbunden ist und eine graphische Benutzerschnittstelle zur Darstellung der Objekte umfasst,
- wobei die Bedien- und Beobachtungsstation dafür ausgestaltet und eingerichtet ist, dass für ausgewählte Mess- und/oder Zustandsgrößen über die graphische Benutzerschnittstelle entsprechend einer Benutzereingabe Grenzwerte (152, 153) zur Überwachung spezifiziert werden,
- wobei die graphische Benutzerschnittstelle dafür ausgestaltet und eingerichtet ist, einen Zeitverlauf (151) hinsichtlich der spezifizierten Grenzwerte zu überwachender Mess- und/oder Zustandsgrößen innerhalb eines benutzerindividuellen Kontrollbereichs (150) darzustellen,
- wobei die Visualisierungsdienstkomponente (210) dafür ausgestaltet und eingerichtet ist, den Zeitverlauf der zu überwachenden Mess- und/oder Zustandsgrößen und an der graphischen Benutzerschnittstelle dargestellte Inhalte zu erfassen,
- wobei die Visualisierungsdienstkomponente ferner dafür ausgestaltet und eingerichtet ist, bei einem nicht dargestellten oder verdeckten Kontrollbereich eine Signalisierung von Grenzwertüber- und/oder -unterschreitungen innerhalb eines Anwenderselektionsbereichs (110) an der graphischen Benutzerschnittstelle zu steuern.

13. Prozessleitsystem nach Anspruch 12,
bei dem zusätzlich ein Engineering-System (300) vorgesehen ist und bei dem das Engineering-System dafür ausgestaltet und eingerichtet ist, die computerbasierten Objekte in einer Datenbank des Engineering-Systems persistent zu speichern, die Objekte zu verwalten und für ausgewählte Mess- und/oder Zustandsgrößen spezifizierte Bedingungen zur Erzeugung von Alarmen vorzugeben.

14. Prozessleitsystem nach einem der Ansprüche 12 oder 13,
bei dem die Steuerungseinrichtung (200) ferner dafür ausgestaltet und eingerichtet ist, die computerbasierten Objekte und die ihnen zugeordneten Mess- oder Zustandsgrößen zu einem Prozessabbild zu aggregieren und das Prozessabbild laufend zu aktualisieren.
